# EUROPEAN PATENT APPLICATION

(11) **EP 4 838 788 A1**
(43) Date of publication of application: **11.11.2026**
(21) Application number: 25174878.6
(22) Date of filing: 07.05.2025
(51) Int. Cl.: H04B 3/46, H04L 41/00

(54) **APPARATUS AND METHOD FOR NETWORK DIAGNOSTICS**

(71) Applicant: NXP B.V., 5656 AG Eindhoven (NL)
(72) Inventor: DE HAAS, Clemens Gerhardus Johannes, 5656 AG Eindhoven (NL); VAN DER HEIJDEN, Rigor Hendrikus Lambertus, 5656 AG Eindhoven (NL)
(74) Representative: Schmütz, Christian Klaus Johannes

(57) **Abstract**

This disclosure relates to an apparatus, a method, and a computer program for generating a strength profile.

## Description

### TECHNICAL FIELD

The present disclosure relates to an apparatus for generating a strength profile and a respective method as well as a computer program and a non-transient machine-readable storage medium comprising instructions for carrying out said method.

### BACKGROUND

Wired networks, such as 1 0BASE-T 1S networks, may be used in the context of many different use cases such as in vehicles or parts of vehicles to allow data transmission between on-board devices including, for example, onboard systems, electric motors or any other electric devices. In the case of mobile setups, such as vehicles, such networks may be highly integrated and may be complex in nature, because they may be used to connect multiple different devices via a multi-drop bus. This complexity can affect the serviceability and maintenance of the wired network, such as identifying and repairing faults that may occur, or determining that the wired network is in good condition.

### SUMMARY

According to a first aspect of the present disclosure there is provided an apparatus for generating a strength profile, the apparatus being configured to transmit, to one or more network nodes of a wired network, a first signal at a first signal strength; transmit, to the one or more network nodes of the wired network, a second signal at a second signal strength, wherein the second signal strength is less than the first signal strength; receive, from the one or more network nodes of the wired network, one or more feedback signals in response to the first and second signals; determine, based on the received one or more feedback signals, whether the first and second signals are received by the one or more network nodes of the wired network; and generate, based on the determination, a first strength profile indicating, for each of the one or more network nodes of the wired network, the smallest signal strength for which signals are receivable by the respective network node.

In one or more embodiments the apparatus is further configured to transmit, to one or more network nodes of the wired network, a third signal at a third signal strength that is less than the second signal strength and/or the first signal strength; receive, from the one or more network nodes of the wired network, one or more feedback signals in response to the third signal; and determine, based on the received one or more feedback signals in response to the third signal, whether the third signal is received by the one or more network nodes of the wired network.

In one or more embodiments the apparatus is further configured to generate the first strength profile based on the determinations regarding the received feedback signals, the first strength profile indicating, for each of the one or more network nodes of the wired network, the smallest signal strength for which signals are receivable by the respective network node.

In one or more embodiments the apparatus is further configured to transmit, to one or more network nodes of the wired network, a third signal at a third signal strength that is less than the second signal strength and/or the first signal strength; receive, from the one or more network nodes of the wired network, one or more feedback signals in response to the third signal; determine, based on the received one or more feedback signals in response to the third signal, whether the third signal is received by the one or more network nodes of the wired network; and generate the first strength profile based on the determinations regarding the received feedback signals, the first strength profile indicating, for each of the one or more network nodes of the wired network, the smallest signal strength for which signals are receivable by the respective network node.

In one or more embodiments the apparatus is further configured to compare the first strength profile to a predetermined strength profile to identify differences between the strength profiles; and determine a fault in the wired network based on the differences identified in the comparison.

In one or more embodiments Physical Level Collision Avoidance (PLCA) is enabled for all nodes of the wired network and the apparatus is further configured to transmit the first and second signals as BEACON signals.

In one or more embodiments the apparatus is further configured to transmit a signal to activate each of the one or more network nodes of the wired network using PLCA; transmit the first and second signals using Carrier-Sense Multiple Access with Collision Detection (CSMA/CD); transmit a signal triggering a report from each of the one or more network nodes of the wired network; and receive, as the one or more feedback signals in response to the first and second signals from the one or more network nodes of the wired network, the report including an indication of the smallest signal strength for which signals are receivable by the respective network node.

In one or more embodiments the apparatus is further configured to generate the first strength profile only for compatible network nodes.

In one or more embodiments the wired network is a network in accordance with the 10BASE-T1S standard.

In one or more embodiments the apparatus is further configured to generate the first strength profile only for compatible network nodes; and/or the wired network is a network in accordance with the 10BASE-T1S standard.

In one or more embodiments the apparatus is further configured to start a new PLCA cycle with each of the first and the second signals, respectively.

According to a second aspect of the present disclosure there is provided a method for generating a strength profile, the method comprising transmitting, to one or more network nodes of a wired network, a first signal at a first signal strength; transmitting, to the one or more network nodes of the wired network, a second signal at a second signal strength, wherein the second signal strength is less than the first signal strength; receiving, from the one or more network nodes of the wired network, one or more feedback signals in response to the first and second signals; determining, based on the received one or more feedback signals, whether the first and second signals are received by the one or more network nodes of the wired network; and generating, based on the determination, a first strength profile indicating, for each of the one or more network nodes of the wired network, the smallest signal strength for which signals are receivable by the respective network node.

In one or more embodiments the method further comprises transmitting, to one or more network nodes of the wired network, a third signal at a third signal strength that is less than the second signal strength and/or the first signal strength; receiving, from the one or more network nodes of the wired network, one or more feedback signals in response to the third signal; and determining, based on the received one or more feedback signals in response to the third signal, whether the third signal is received by the one or more network nodes of the wired network.

In one or more embodiments the method further comprises generating the first strength profile based on the determinations regarding the received feedback signals, the first strength profile indicating, for each of the one or more network nodes of the wired network, the smallest signal strength for which signals are receivable by the respective network node.

In one or more embodiments the method further comprises transmitting, to one or more network nodes of the wired network, a third signal at a third signal strength that is less than the second signal strength and/or the first signal strength; receiving, from the one or more network nodes of the wired network, one or more feedback signals in response to the third signal; determining, based on the received one or more feedback signals in response to the third signal, whether the third signal is received by the one or more network nodes of the wired network; and generating the first strength profile based on the determinations regarding the received feedback signals, the first strength profile indicating, for each of the one or more network nodes of the wired network, the smallest signal strength for which signals are receivable by the respective network node.

In one or more embodiments the method further comprises comparing the first strength profile to a predetermined strength profile to identify differences between the strength profiles; and determining a fault in the wired network based on the differences identified in the comparison.

In one or more embodiments Physical Level Collision Avoidance (PLCA) is enabled for all nodes of the wired network and wherein the first and second signals are transmitted as BEACON signals.

In one or more embodiments the method further comprises transmitting a signal to activate each of the one or more network nodes of the wired network using PLCA; transmitting the first and second signals using Carrier-Sense Multiple Access with Collision Detection (CSMA/CD); transmitting a signal triggering a report from each of the one or more network nodes of the wired network; and receiving, as the one or more feedback signals in response to the first and second signals from the one or more network nodes of the wired network, the report including an indication of the smallest signal strength for which signals are receivable by the respective network node.

In one or more embodiments the method further comprises generating the first strength profile only for compatible network nodes.

In one or more embodiments the wired network is a network in accordance with the 10BASE-T1S standard.

In one or more embodiments the method further comprises generating the first strength profile only for compatible network nodes; and/or wherein the wired network is a network in accordance with the 10BASE-T1S standard.

In one or more embodiments the method further comprises starting a new PLCA cycle with each of the first and the second signals, respectively.

According to a third aspect of the present disclosure, there is provided a computer program comprising instructions that, when executed by a processor, causes the processor to perform a method according to any one of the embodiments herein.

According to a fourth aspect of the present disclosure, there is provided a non-transient machine-readable storage medium comprising instructions that, when executed by a computer, cause the computer to transmit, to one or more network nodes of a wired network, a first signal at a first signal strength; transmit, to the one or more network nodes of the wired network, a second signal at a second signal strength, wherein the second signal strength is less than the first signal strength; receive, from the one or more network nodes of the wired network, one or more feedback signals in response to the first and second signals; determine, based on the received one or more feedback signals, whether the first and second signals are received by the one or more network nodes of the wired network; and generate, based on the determination, a first strength profile indicating, for each of the one or more network nodes of the wired network, the smallest signal strength for which signals are receivable by the respective network node.

The above discussion is not intended to represent every example embodiment or every implementation within the scope of the current or future claim sets. The figures and detailed description that follow also exemplify various example embodiments. Various example embodiments may be more completely understood in consideration of the following detailed description in connection with the accompanying drawings.

### BRIEF DESCRIPTION OF THE DRAWINGS

The present invention is illustrated by way of example and is not limited by the accompanying figures, in which like references indicate similar elements. Elements in the figures are illustrated for simplicity and clarity and have not necessarily been drawn to scale.
- Fig. 1A:: an example embodiment of an end node or head node for use in a wired network;
- Fig. 1B:: an example embodiment of an end node or head node for use in a wired network;
- Fig. 1C:: an example embodiment of a drop node for use in a wired network;
- Fig. 2:: an example embodiment of a wired network;
- Fig. 3:: a flow diagram showing an example embodiment of generating a strength profile in accordance with the present disclosure;
- Fig. 4:: a flow diagram showing an example embodiment of generating a strength profile in accordance with the present disclosure;
- Fig. 5:: a flow diagram showing an example embodiment of generating a strength profile in accordance with the present disclosure;
- Fig. 6:: an exemplary timeline of an example embodiment of generating a strength profile;
- Fig. 7:: an exemplary timeline of an example embodiment of generating a strength profile;
- Fig. 8:: an example embodiment of a strength profile.

### DETAILED DESCRIPTION

The detailed description set forth below in connection with the appended drawings is intended as a description of various configurations and is not intended to represent the only configurations in which the concepts described herein may be practiced. The detailed description includes specific details for the purpose of providing a thorough understanding of various concepts. However, it will be apparent to those skilled in the art that these concepts may be practiced without these specific details. In some instances, well known structures and components are shown in block diagram form in order to avoid obscuring such concepts.

Several aspects of network-related systems will now be presented with reference to various apparatus and methods. These apparatus and methods will be described in the following detailed description and illustrated in the accompanying drawings by various blocks, components, circuits, processes, algorithms, etc. (which may be referred to as "elements"). These elements may be implemented using electronic hardware, computer software, or any combination thereof. Whether such elements are implemented as hardware or software depends upon the particular application and design constraints imposed on the overall system.

By way of example, an element, or any portion of an element, or any combination of elements may be implemented as a "processing system" that includes one or more processors. Examples of processors include microprocessors, microcontrollers, graphics processing units (GPUs), central processing units (CPUs), application processors, digital signal processors (DSPs), reduced instruction set computing (RISC) processors, systems on a chip (SoC), baseband processors, field programmable gate arrays (FPGAs), programmable logic devices (PLDs), state machines, gated logic, discrete hardware circuits, and other suitable hardware configured to perform the various functionality described throughout this disclosure. One or more processors in the processing system may execute software. Software shall be construed broadly to mean instructions, instruction sets, code, code segments, program code, programs, subprograms, software components, applications, software applications, software packages, routines, subroutines, objects, executables, threads of execution, procedures, functions, etc., whether referred to as software, firmware, middleware, microcode, hardware description language, or otherwise.

Accordingly, in one or more example embodiments, the functions described may be implemented in hardware, software, or any combination thereof. If implemented in software, the functions may be stored on or encoded as one or more instructions or code on a computer-readable medium. Computer-readable media includes computer storage media. Storage media may be any available media that can be accessed by a computer. By way of example, and not limitation, such computer-readable media can comprise a random-access memory (RAM), a read-only memory (ROM), an electrically erasable programmable ROM (EEPROM), optical disk storage, magnetic disk storage, other magnetic storage devices, combinations of the types of computer-readable media, or any other medium that can be used to store computer executable code in the form of instructions or data structures that can be accessed by a computer.

While aspects and implementations are described in this application by illustration to some examples, those skilled in the art will understand that additional implementations and use cases may come about in many different arrangements and scenarios. Innovations described herein may be implemented across many differing platform types, devices, systems, shapes, sizes, and packaging arrangements. For example, implementations and/or uses may come about via integrated chip implementations and other non-module-component based devices (e.g., end-user devices, vehicles, communication devices, computing devices, industrial equipment, retail/purchasing devices, medical devices, artificial intelligence (AI)-enabled devices, etc.). While some examples may or may not be specifically directed to use cases or applications, a wide assortment of applicability of described innovations may occur. Implementations may range a spectrum from chip-level or modular components to non-modular, non-chip-level implementations and further to aggregate, distributed, or original equipment manufacturer (OEM) devices or systems incorporating one or more aspects of the described innovations. In some practical settings, devices incorporating described aspects and features may also include additional components and features for implementation and practice of claimed and described aspects. For example, transmission and reception of (wireless) signals necessarily includes a number of components for analog and digital purposes (e.g., hardware components including antenna, RF-chains, power amplifiers, modulators, buffer, processor(s), interleaver, adders/summers, etc.). It is intended that innovations described herein may be practiced in a wide variety of devices, chip-level components, systems, distributed arrangements, aggregated or disaggregated components, end-user devices, etc. of varying sizes, shapes, and constitution.

The present disclosure generally describes a concept for generating a strength profile. The strength profile may, for example, be used as diagnostic information that may be indicative of the quality of a wiring harness used for wired networks, such as but not limited to a 10BASE-T1S multi-drop bus system. Cable faults like series or short resistance may be derived from the strength profile. In this regard, network diagnostics may be understood as performing analysis of a wired network or of parameters of a wired network, for example to identify cable faults or the like. An example of generating a strength profile includes the steps of transmitting, to one or more network nodes of a wired network, a first signal at a first signal strength; transmitting, to the one or more network nodes of the wired network, a second signal at a second signal strength, wherein the second signal strength is less than the first signal strength; receiving, from the one or more network nodes of the wired network, one or more feedback signals in response to the first and second signals; determining, based on the received one or more feedback signals, whether the first and second signals are received by the one or more network nodes of the wired network; and generating, based on the determination, a first strength profile indicating, for each of the one or more network nodes of the wired network, the smallest signal strength for which signals are receivable by the respective network node. In this regard, the smallest indicated signal strength may be based on a signal strength of the signal having the smallest signal strength from among any transmitted signals, such as the first and second signals, and which was received. However, it is not limited to be the signal strength of the signal having the smallest signal strength from among any transmitted signals that was received, as will be described in further detail below.

The present disclosure may allow determining the location of the respective fault. To enable this, the present disclosure may utilize a single device, such as a node of the network that is configured accordingly via software, hardware or both. The present disclosure also relates to different applications or use cases. For example, a device such as a node may be installed in a wired network to perform the aspects of the present disclosure. However, it may also be possible to update existing nodes of wired networks on a software-level to perform the aspects of the present disclosure. Therefore, the present disclosure relates to applications where the wired network is accordingly configured from the beginning, e.g. after production or assembly of the wired network components at a factory, and to applications where the aspects of the present disclosure are retrofitted on a hardware-level, on a software-level, or both.

The aspects of the present disclosure may be used for wiring harness fault detection of multidrop bus systems. A multidrop bus system is an exemplary form of a wired network based on the multidrop bus topology which can be used to connect a plurality of network nodes of the wired network using a single shared medium such as wires. For example, a single cable that may include any number of wires may be used to connect all network nodes of a multidrop bus system. In contrast, in a typical star-topology network, such as an Ethernet network, separate or individual physical network connections may be required to connect each network node to a central network node, such as a switch. In this case, two or more network nodes cannot be connected to the central node or switch using the same medium, such as a cable having any number of wires. An example application of multidrop bus systems in the automotive sector may defined by the 10BASE-T1S standard. However, other example applications also include industrial systems.

The exemplary 10BASE-T1S standard is a 10 Mbps Ethernet standard as defined in IEEE 802.3cg. It is capable of operating in full/half duplex point-to-point or half-duplex multidrop mode over a single unshielded twisted pair (UTP) cable up to 25m length. The 10BASE-T1S products are generally intended to cover low-speed/low-cost applications in industrial and automotive environments (for example in comparison to the existing 100BASE-T1 ethernet standard). Accordingly, it is an aim to keep the cost for implementing a reliable harness defect detector that is in accordance with embodiments of the present disclosure low.

Faults or defects which may be detected using the aspects of the present disclosure, such as by using a generated strength profile, include faults and defect as defined, for example, by the OPEN Alliance TC14 subgroup "Advanced Diagnostic Features". In accordance therewith, harness defects may be detected during normal operation or in a specific diagnostic mode that may be triggered by a network node. Such errors may comprise detection of any one or more of: OPEN of one bus wire, OPEN of both bus wires, SHORT of both conductors (to ground or supply line), SHORT between both bus wires, SHORT of one conductor (to ground or supply line). In this context, OPEN may be used to refer to an open circuit, while SHORT may be used to refer to a short circuit.

Embodiments of the present disclosure may allow detecting faults or defects in a wiring harness. This may also be referred to as "finger printing", i.e. creating profiles of parts of the network's characteristics, such as whether signals can be received by network nodes, i.e. are receivable, at different signal strengths, such as different voltages or currents used to transmit the signals. In certain embodiments, at least one network node may include an element to select a range of signal strengths such as output voltages or currents to be used by a transmitter or transceiver that is configured to transmit signals to other network nodes. In this context, a signal may refer to any signalling, message or the like that can be transmitted on a wired digital network, such as an ethernet packet. For example, in a dedicated diagnostic mode or when generating a strength profile, the node may check if communication is possible with the other nodes in the network at a certain signal strength. The signal strength may then be lowered in small steps and at each setting it is logged whether communication is still possible for all nodes of the network. After the cycle is completed a "fingerprint" is thus available which may indicate at which signal strength communication failed for each node. In a further example, when a "reference fingerprint" is created at end-of-line of the production of a car and another fingerprint is created during a service at the garage at a later point in time, the difference in the other fingerprint compared to the reference may indicate wiring faults and potentially a location of where the fault may be located. As such, a fingerprint, such as a first strength profile, may be created and may then be compared to a predetermined profile that may have been previously generated in a similar manner or that could have been stored or created in a different manner. This allows detecting faults, such as wiring faults, in the wired network using the strength profile. However, such strength profiles and any fingerprint information included in them may also be used for general purposes of analyzing a wired network and is not limited to being used in the example use case of performing network diagnostics to identify wiring faults.

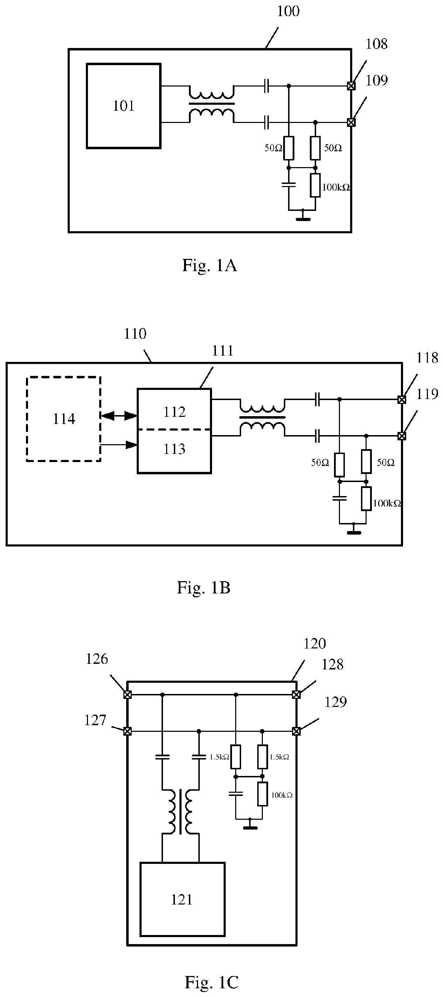

Fig. 1A shows an exemplary end node or head node 100 comprising a PHY unit 101, a first I/O terminal 108 and a second I/O terminal 109. In this example embodiment, the end node or head node 100 may be connected to an end of a data bus of a wired network such that it may terminate the wired network. Hence, in this example embodiment, the term end node may be used to relate to a network node that is arranged at an end of the wired network and/or its data bus. The end node or head node 100 may be connected to the wired network using the first and second I/O terminals 108, 109. For example, each of said terminals may be connected to at least one wire used to transmit data to at least one further node of the wired network. The end node or head node 100 may serve as a head node when it is used to control at least some of the operations performed within the wired network. Hence, in this example embodiment, the term head node may be used to relate to a network node that is configured to at least partially control the wired network and/or its network nodes. However, a single end node or head node 100 may serve as an end node as well as a head node at the same time. As such the "or" in end node or head node 100 indicates that it can perform either or both functions.

The end node or head node 100 may represent an embodiment of an apparatus for network diagnostics at a diagnostic network node in a wired network and for generating a strength profile. For example, the end node or head node 100 may be an apparatus that is configured to perform steps that cause at least one of the wired network and any connected network nodes to perform steps that serve the purpose of identifying or diagnosing conditions of the respective wired network and network nodes. Such conditions may include the signal strength used to transmit any signals from the end node or head node 100 to any network node such that the respective network node is able to properly receive the respective signals, as will be described in further detail below. In this regard, a signal may represent one or more bits of data and a signal strength of such a signal may represent a specific voltage value or, in the case of differential signals, a peak to peak voltage (e.g. 1 Vpp) that can be used to transmit the respective signal. Different currents may also be used as different signal strengths. For example, a first signal strength may be 1 Vpp, and a second signal strength may be 0.9 Vpp. In this example, the second signal strength is less than the first signal strength. A third signal strength may be 0.95 Vpp, i.e. between the first and second signal strength, or 0.8 or even less Vpp, i.e. less than the first and second signal strengths. In a non-differential case, such signal strengths may be any voltage values, such as 5V, 4V and 3V, or 1V, 0.5V and 0V, or any other positive or negative voltage values instead. Similarly, the number of signal strengths is not limited to two or three and can be any other higher number of such values. By generating the strength profile, the end node or head node 100, acting as an exemplary apparatus for generating a strength profile such as a diagnostic network node of the wired network, may generate a strength profile that may enable service and maintenance of the wired network. Particularly, the strength profile and respective network diagnostics may facilitate identifying and/or repairing faults in the wired network. This may be particularly helpful in case the wired network is of technically complex or highly integrated technical nature, such as a wired network that is installed in a vehicle or the like. In such cases, it may be very difficult or impossible to manually check each network node as well as all parts of the network, including the wiring of the network data bus, for faults. Hence, the presently disclosed aspects provide the advantage of overcoming this issue by providing an easy and quick way to perform such diagnosis without requiring manual or labor-intensive physical inspection of the analyzed components.

In the exemplary embodiment of Fig. 1A, the term PHY unit 101 is used to relate to a unit of the end node or head node 100 that may perform network functions on the physical layer. "PHY" is commonly used to describe a device which connects a Media Independent Interface (MII) to a Medium Dependent Interface (MDI). The medium is also called a "Physical Layer" and may, for example, be an ethernet cable, such as an Unshielded Twisted Pair (UTP). Accordingly, the PHY unit 101 may relate to circuitry responsible for the physical transmission and reception of data. It may handle encoding and decoding of signals, as well as the electrical interface with the data bus or network cable used to connect to other nodes of the wired network. Therefore, the PHY unit 101 may allow transmission and reception of such signals via any wires which the end node or head node 100 is connected to, such as via the first and second I/O terminals 108, 109. In addition or alternatively, parts of the features of the PHY unit 101 may be distributed among several individual or combined sub-units. The form of the PHY unit 101 is design-specific and may be chosen accordingly.

In the exemplary embodiment of Fig. 1A, the terms I/O and I/O terminal are exchangeable and refer to a physical interface via which a data bus of the wired network, such as one or more network wires, may be coupled with the end node or head node 100. The end node or head node 100 may have one or multiple such I/O terminals, as exemplarily shown by the first I/O 108 and second I/O 109 in Fig. 1A. The number of I/O terminals is design-specific and can be chosen to be in accordance with the requirements of the wired network, such as the number of wires of the wired network. In the example of a 10BASE-T1S network, the wired network may have a single pair of twisted network wires.

The end node or head node 100 in the exemplary embodiment of Fig. 1A or any other embodiments of the present disclosure may comprise further optional circuitry. For example, the end node or head node 100 may comprise additional electric components such as the capacitors and resistors in the example arrangement shown in Fig. 1A. Each of these capacitors and resistors may be chosen and arranged according to design-requirements. For example, in Fig. 1A, the end node or head node 100 may comprise three resistors with values 50 Ω (two times) or 100 kΩ. These example values are design-specific and may be chosen accordingly. The pair of 50 Ω resistors may represent network termination resistors. As also shown in Fig. 1A, a choke may optionally be arranged between the PHY unit 101 and the first and second I/O 108, 109. Placing a choke between the PHY unit and the network bus in this or a similar manner may help to ensure reliable communication by reducing noise and improving EMC. As further shown in Fig. 1A, AC coupling capacitors may optionally be included in the end node or head node 100 as well. In the physical layer implementation, such AC coupling capacitors substantially allow desired data signals to pass while blocking unwanted DC components. This may enhance signal integrity, prevent ground loop issues, and may provide flexibility for power delivery over the same wires.

Each one of these additional or alternative components of the end node or head node 100 may be implemented using electronic hardware, computer software, or any combination thereof. Whether such elements are implemented as hardware or software depends upon the particular application and design constraints imposed on the overall system.

An example wired network in which the end node or head node 100 may be used may include two respective end nodes or head nodes 100. In this case, only one or both may represent a head node, an end node, or both (at least partially). More particularly, a single end node or head node 100 of a wired network as illustrated in Fig. 1A may serve as an end node as well as a head node at the same time and is not limited to the function of only one of the two.

Fig. 1B shows an exemplary end node or head node 110 which, in comparison to the end node or head node 100 of Fig. 1A, may additionally include an optional controller 114 as well as a PHY / PMD Transceiver 112 and a Vₒᵤₜ Select 113. The remaining elements of end node or head node 110 may be identical to the respective elements of Fig. 1A.

The exemplary controller 114 may be or include one or more of any one of processors, memories, microprocessors, microcontrollers, GPUs, CPUs, application processors, DSPs, RISC processors, SoCs, baseband processors, FPGAs, PLDs, state machines, gated logic, discrete hardware circuits or the like. It may control or be configured to control parts of the end node or head node 110 such that it carries out the various presently describes aspects and steps. The optional nature of the controller 114 in this example embodiment is illustrated by dashed lines. In an exemplary embodiment, the end node or head node 110 may be an apparatus for generating a strength profile of a wired network configured to carry out any of the aspects of the present disclosure.

An exemplary PHY unit 111 of end node or head node 110 may include a PHY / PMD Transceiver 112. PMD, i.e. Physical Medium Dependent, may be a sublayer of the PHY that defines the specific physical characteristics of the transmission medium, such as the signal levels, timing, and cable specifications. In the example of 10BASE-T1S, the PMD defines how signals are transmitted over the single twisted pair. The respective PHY/PMD transceiver 112 of the head node or end node 110 may thus act as the hardware interface that allows the node to communicate over the Ethernet network. To do so, the PHY/PMD transceiver 112 may encode outgoing data into the appropriate electrical signals, transmit those signals over a twisted-pair cable, receive incoming electrical signals from the cable, decode those signals back into digital data and/or may also be a part of the Physical Layer Collision Avoidance, PLCA, system. The end node or head node 110 may also include a switch with an embedded PHY as an alternative to the PHY unit 110 and/or the PHY unit 110 including a PHY / PMD Transceiver 112.

An exemplary Vₒᵤₜ Select 113 function may also be included in the exemplary PHY unit 111 of end node or head node 110. As illustrated by the dashed line of PHY unit 111, it may be part of the same physical unit 111 as the PHY / PMD Transceiver 112, but may also be a separate part of PHY unit 111. This element may determine, select and/or set an output voltage to be used for transmission of any signals by the PHY unit 111. However, as already explained, even though this element is called Vₒᵤₜ Select, it may also be used to determine, select and/or set the signal strength by changing other parameters than the voltage, such as, for example, the current strength or other parameters that may be used to define a signal strength. For example, a typical output signal strength for communicating with other nodes of the wired network may be an output voltage value of 1 Vpp, i.e. 1 Volt peak to peak. Accordingly, the signal strength may include differential voltages. The Vₒᵤₜ Select 113 may determine that this or another voltage should be selected as a reference output voltage and may configure the end node or head node 110 such that it transmits signals using this voltage. Subsequently, the Vₒᵤₜ Select 113 may determine another voltage, such as a decreased output voltage, for transmission of signals and change the output voltage of the end node or head node 110 accordingly. Thus, the signals transmitted by the PHY / PMD Tansceiver 112 and/or PHY unit 111 may be adjusted by the Vₒᵤₜ Select 113 accordingly.

Rather than being separate elements, the PHY / PMD Transceiver 112 and/or Vₒᵤₜ Select 113 may also be included in or be a part of the PHY unit 111 or 101 itself and may thus form part of a single unit. As previously described, any of these elements can be implemented using software or hardware and the like.

Fig. 1C shows an exemplary drop node 120. A drop node may be a node of the wired network which shares the single network transmission medium with other network nodes and may be different from the end node or head node of the wired network. However, in a multidrop network, a "drop node" may also refer to any device or node that is connected to the shared communication medium, or "bus" such that it may also implement a part of or all of the features of a head node, similar to the end node or head node 100. It may be located at any point where a device "drops" onto the network. As such, the drop node may be one of the devices configured to receive and transmit signals from and/or to the other network nodes and if it implements parts of or all features of a head node, may also be used as an apparatus for generating a strength profile, such as a diagnostic node of a wired network.

In the exemplary embodiment of Fig. 1C, the drop node 120 may include a PHY unit 121. The PHY unit 121 may be similar to or like the PHY unit 101 or 111 previously described. The drop node 120 may further include a first I/O 126, a second I/O 127, a third I/O 128 and a fourth I/O 129. These I/Os serve the purpose of connecting to the bus of the wired network, similar to the I/Os of end node or head node 100, 110. By using four I/O pins as in this example, daisy chaining may be supported and signal integrity may be improved. However, an exemplary drop node may also use only two I/O pins, each of which may be used to drop down from a wire of the data bus, for example by using a splice.

In the exemplary embodiment of Fig. 1C, the drop node 120 may also include resistors, capacitors, chokes/inductances and the like. They may serve similar functions as described with respect to the end node or head node 100, 110. For example, these optional elements may include two optional resistors with a resistance of 1.5 kΩ that may serve as stub termination. This resistance value may be in accordance with the 10BASE-T1S standard and the optional stub terminations may be used to minimize signal reflections and improve signal integrity in multidrop networks.

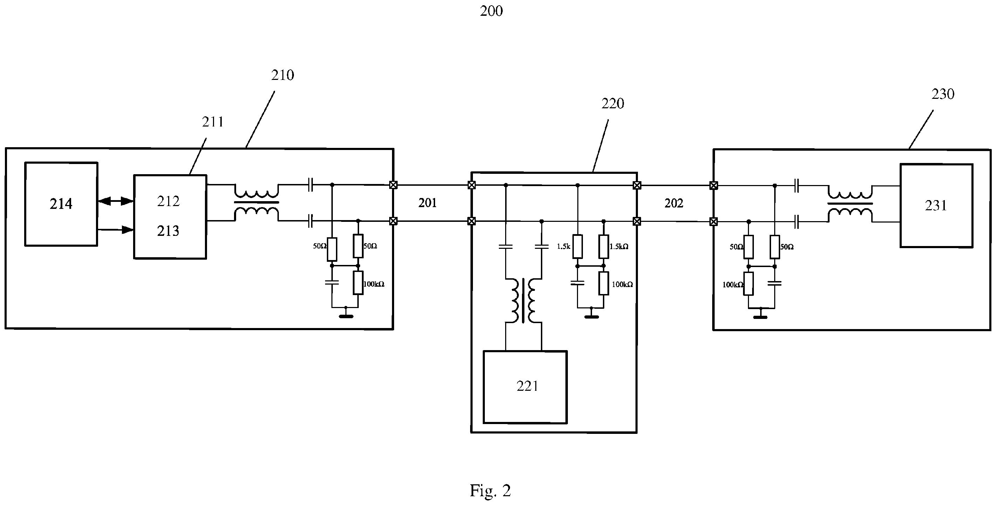

Fig. 2 shows an exemplary wired network 200. The wired network 200 may be a 10BASE-T1S network or any other type of wired network. It may include an end node or head node 210, a drop node 220 and an end node 230. The respective head node, drop node and end node may be similar to or like any one of the end node or head node 100, 110 or drop node 120. Accordingly, the end node or head node 210 may include a PHY unit 211, a PHY / PMD Transceiver 212, a Vₒᵤₜ Select 213 and a controller 214 similar to those of end node or head node 100, 110. Further, the drop node 220 may include a PHY unit 221 like drop node 120. Furthermore, the end node 230 may include a PHY unit 231 like end node or head node 100, 110.

While the wired network 200 of Fig. 2 only shows one drop node 220, it may also include any other number of drop nodes, which may all be similar to or like drop node 220. However, each one of the drop nodes may relate to different kinds of devices that may serve different inherent functions than other nodes. For example, these different devices may be on-board devices of a vehicle or industrial machines or apparatuses or the like which need to be able to communicate via the wired network 200.

In the exemplary embodiment of Fig. 2, the wired network 200 may include a physical interface 201. For example, the physical interface 201 may be made of multiple wires, such as a single pair of twisted wires (in the exemplary case of the wired network 200 being a 10Base-T1S network). More particularly, the physical interface 201 may be a Media Dependent Interface, MDI, which defines the connectors and the signaling that is used to connect the physical transmission medium (the wires) to the PHY. The MDI may thus serve as the point of interconnection between the network device's PHY and the network cabling. The physical interface 202 may be similar to or like the physical interface 201.

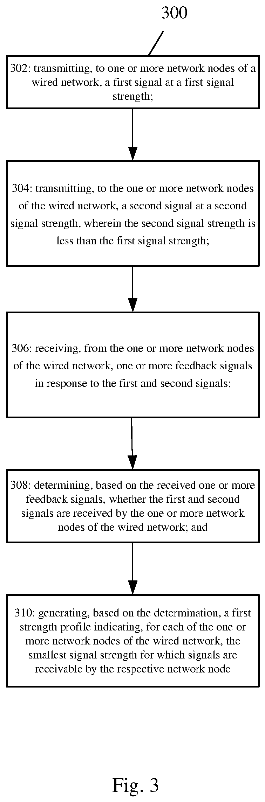

Fig. 3 shows an exemplary flow diagram presenting an example method or series of steps that may be performed by one or more devices similar to or like any one or more of the end node or head node 100, 110, such as generating a strength profile. However, it also presents a method that could be performed by any other one or more devices or parts of devices.

Particularly, Fig. 3 shows an example of a method 300 for generating a strength profile in accordance with the present disclosure. At step 302, the example flow begins by transmitting, to one or more network nodes of a wired network, a first signal at a first signal strength. At step 304, the method is transmitting, to the one or more network nodes of the wired network, a second signal at a second signal strength, wherein the second signal strength is less than the first signal strength. At step 306, the method is receiving, from the one or more network nodes of the wired network, one or more feedback signals in response to the first and second signals. At step 308, the method is determining, based on the received one or more feedback signals, whether the first and second signals are received by the one or more network nodes of the wired network. At step 310, the method is generating, based on the determination, a first strength profile indicating, for each of the one or more network nodes of the wired network, the smallest signal strength for which signals are receivable by the respective network node.

The exemplary method 300 of the present disclosure has the advantage that a strength profile, which may also be referred to as a fingerprint of the wired network, may be created easily and without requiring physical assessment or inspection of the wired network. As a result of method 300, a first strength profile may be generated which may be unique for the particular network. This unique strength profile facilitates quick and easy diagnostic of the wired network and the network nodes later on, because it may be compared with a predetermined profile, such as a predetermined strength profile. Said predetermined profile may be created using a method similar to or like method 300, but can also be generated differently, such as by processes that are completed during a design-phase of wired networks or during production and/or assembly of wired networks. Accordingly, a predetermined strength profile may be a profile that has been previously stored, irrespective from the method used for generating the predetermined strength profile. If this predetermined strength profile differs from the first strength profile, faults in the wired network may easily be detected and/or located.

In the exemplary method 300, a node may not respond with any feedback signals at all. When determining whether the first and second signals are received by the one or more network of the wired network, the apparatus may determine that the node is not able to receive any signals below a certain signal strength. Additionally or alternatively, the apparatus may determine that the network node or the network bus may be defective in a manner that prevents the network node to respond to any signals. Accordingly, such information may facilitate fault detection for the wired network.

**In** the exemplary method 300, a network node being connected to the wired network may mean that the network node is supposed to be a part of or installed in the wired network such that it should be able to receive signals. Even if the wired network is damaged or defective, such as in the form of a wiring (harness) fault or even a physical disconnection, a network node would still be considered connected to the wired network but with a fault of the wired network being present. Accordingly, a network node of the wired network may be regarded as being connected to the wired network, irrespective from any fault of the wired network being present or not.

**In** another exemplary embodiment of Fig. 3, the method 300 may further comprise steps of transmitting, to one or more network nodes of the wired network, a third signal at a third signal strength that is less than the second signal strength and/or the first signal strength, of receiving, from the one or more network nodes of the wired network, one or more feedback signals in response to the third signal, and of determining, based on the received one or more feedback signals in response to the third signal, whether the third signal is received by the one or more network nodes of the wired network. Additionally or alternatively, the method may further comprise the step of generating the first strength profile based on the determinations regarding the received feedback signals (such as in response to the first, second and third signals), the first strength profile indicating, for each of the one or more network nodes of the wired network, the smallest signal strength for which signals are receivable by the respective network node. There may be only a single step of generating the first strength profile rather than two, such as once based on the feedback in response to the first and second signals and once in response to the feedback to the first, second and third signals. There may also be separate steps of generating the strength profile, respectively.

For example, these additional steps allow increasing the number of signal strengths that are used to transmit signals for generating the strength profile. By increasing the number of signal strengths and signals, the resolution and thus accuracy of the generated strength profile may be advantageously increased. Accordingly, the strength profile may be more sensitive to the status of the wired network and/or subsequent changes (for example due to faults), which may allow detecting errors that may otherwise remain indetectable if not enough signal strengths are tested and used as diagnostic information. Even further, the number of additional signals that may be transmitted at reduced signal strengths is not limited and can be chosen high enough to achieve the desired level of accuracy or sensitivity. Accordingly, a sequence of a plurality of signals may be transmitted at sequentially reduced signal strengths to increase the accuracy and resolution of the generated strength profile.

In another exemplary embodiment of Fig. 3, the method 300 may further comprise the steps of comparing the first strength profile to a predetermined strength profile and of determining a fault in the wired network based on the comparison. These additional steps may allow the method to compare the first strength profile to another strength profile. Accordingly, the method may compare the status of the wired network at any point in time during which the first strength profile is generated with the original or a reference state of the wired network, which may greatly facilitate network diagnostics. For example, if a fault occurs, the strength profile of the wired network may differ from a predetermined strength profile such as a strength profile created without said fault. In particular, such differences may be identified in a comparison of the first strength profile with the predetermined strength profile and when a difference of the indicated smallest signal strength for which signals are received by one or more network node is identified between the compared strength profiles, this may indicate a fault in the wired network, such as a fault of the respective network node(s) in one example, such as a fault of the physical interface connecting the respective network node(s) in another example, or such as a fault in the wiring used to connect network node(s) of the wired network in yet another example. This may make it possible to more accurately determine and locate faults in the wired network.

In another exemplary embodiment of Fig. 3, the method 300 may further comprise the step of generating the first strength profile only for compatible network nodes. By excluding network nodes that do not support strength profile generation, i.e. that are not compatible, the method is able to more flexibly and dynamically deal with wired networks which may comprise such incompatible network nodes. Such incompatibility may, for example, arise from faults of the respective network node or from an inherent inability of a network node to perform and/or support at least parts of the strength profile generation. Accordingly, the method may advantageously be performed even if such incompatible network nodes are present and by only considering compatible ones, such that strength profiles may still be generated and such that network diagnostics may still be performed.

Even though the preceding method and steps were described with respect to the flow diagram of Fig. 3, the present disclosure is not limited to steps of a method and may instead be implemented and/or performed by any hardware that is configured to perform such steps.

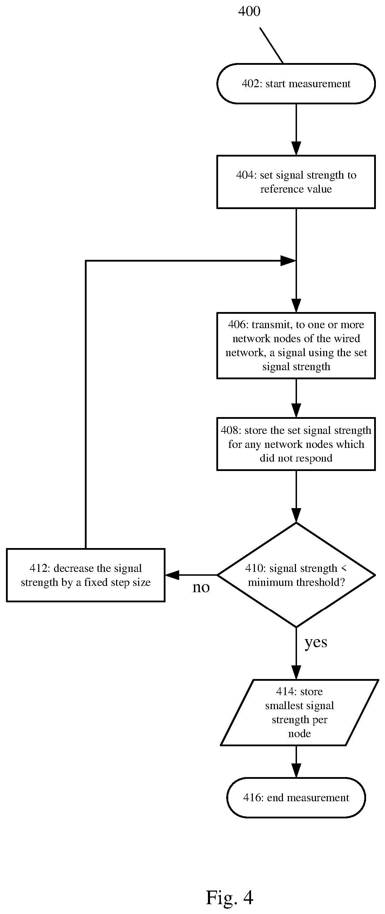

Fig. 4 shows an exemplary flow diagram presenting an example method or series of steps that may be performed by one or more devices similar to or like any one or more of the end node or head node 100, 110, such as an apparatus for generating a strength profile. However, it also presents a method that could be performed by any other one or more devices or parts of devices.

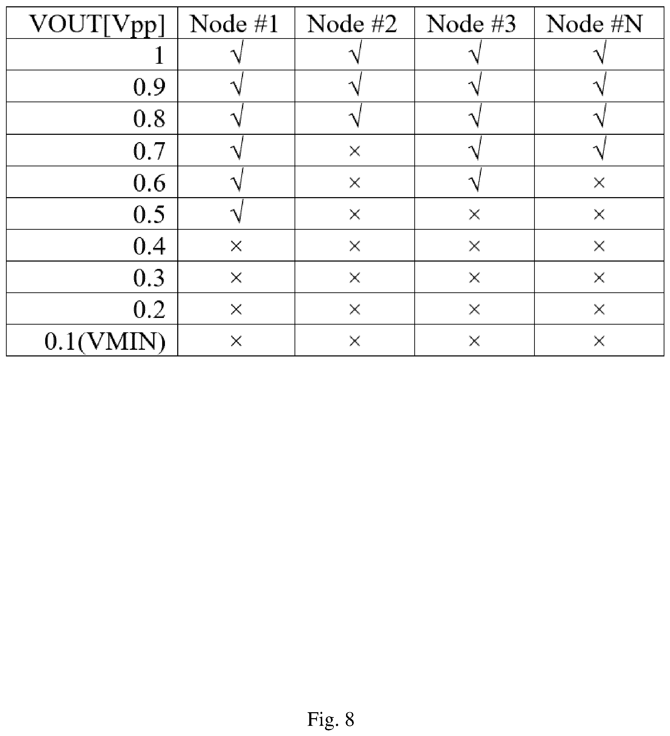

Particularly, Fig. 4 shows an example of a method 400 for generating a strength profile in accordance with the present disclosure. At step 402, the example flow begins by starting a measurement. Said measurement may be performed to generate a first strength profile including at least one value indicative of a smallest signal strength for which each of the one or more network nodes of the wired network properly receives a signal. At step 404, the apparatus, such as a diagnostic network node or the like, may set its signal strength to an initial value, such as a reference value, which, in the example of 10BASE-T1S networks may be 1 Vpp, but is not limited to it. It may continue, at step 406, by transmitting, to one or more network nodes of the wired network, a signal at the set signal strength, which, if performed after step 404, may be the reference value. At step 408, the apparatus, such as a the diagnostic network node or the like, may store the set signal strength for any network nodes which did not respond. For example, if one network node did not respond, this may be recorded in step 408. At step 410, the apparatus, such as a the diagnostic network node or the like, may compare the previously set signal strength with a minimum signal strength threshold. If the signal strength is not below said minimum signal strength threshold, step 412 may be carried out in which the signal strength may be decreased by a fixed step size. The step size may also be unfixed and can be changed according to the requirements of the specific application. After decreasing the signal strength, the method may continue from steps 412 over 406 and 408 to 410 until the signal strength is determined to be below the minimum signal strength threshold at step 410. In step 414, the smallest signal strength that was determined to still be properly receivable by each network node may be stored. Properly receivable in this context may refer to successfully receiving or decoding the received signal. Accordingly, a first strength profile indicating the smallest signal strength for which signals are receivable by the respective network node is generated. In this regard, "indicating" may refer to any suitable manner that indicates a threshold between which a network node is still able to receive a signal, such as the first, the second, the third or any one of a plurality of signals transmitted with different signal strengths. For example, if a network node properly receives a signal transmitted at the third signal strength, the third signal strength may be stored as an indicative value. Additionally or alternatively, a value slightly above or below the third signal strength could be stored as an indicative value. If, for example, the second and third signals are not received by a network node, instead of storing the first signal strength, the second signal strength could be stored to indicate the greatest signal strength that the network not is not able to receive, which may still be indicative of a smallest signal strength for which signals are receivable by the respective network node. Also, a plurality of values may be stored for indicating the smallest signal strength, respectively, as is shown and will be described further with respect to Figure 8. Accordingly, any value or combination of values that may be used to indicate a threshold at which a network is able or not able to receive signals may represent an indication, of the first strength profile, for the smallest signal strength for which signals are receivable by the respective network node.

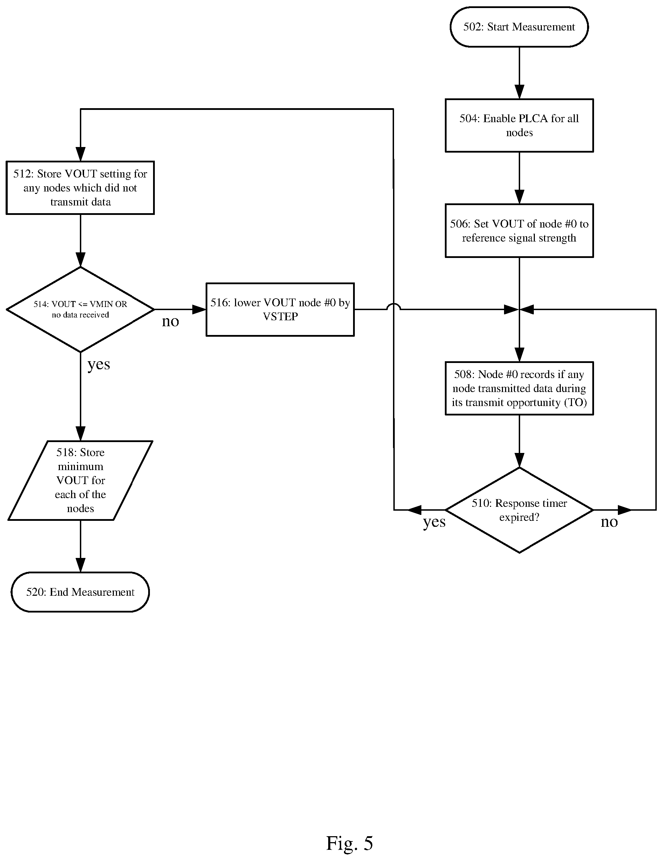

Fig. 5 shows an exemplary flow diagram presenting an example method or series of steps that may be performed by one or more devices similar to or like any one or more of the end node or head node 100, 110, such as an apparatus for generating a strength profile. However, it also presents a method that could be performed by any other one or more devices or parts of devices.

Particularly, Fig. 5 shows an example of a method 500 for generating a strength profile in accordance with the present disclosure. At step 502, the measurement is started. At step 504, PLCA may be enabled for all nodes of the wired network. This allows preventing collisions of signals from multiple network nodes transmitted simultaneously. At step 506, node #0, which may be an apparatus for generating the strength profile, such as a diagnostic network node, may set the output voltage to a reference signal strength and transmit a signal at this voltage level or value. As previously described, the output voltage is just one of multiple possible parameters that may have an effect on signal strength and this parameter is not limited to just the output voltage. At step 508, node #0 may record if any nodes of the wired network transmitted data during their respective transmit opportunity in accordance with PLCA. At step 510, a timer may be checked that measures the time from transmission of the signal at step 506. If the timer did not expire, the method may repeat steps 508 and 510 until it has. At step 512, node #0 may store the values of the output voltage, Vₒᵤₜ, or any other relevant signal strength value, for any nodes which did not respond by transmitting data during their transmit opportunity. At step 514, node #0 may check whether the previous Vₒᵤₜ or the like setting is smaller than or equal to a minimum threshold output voltage, Vₘᵢₙ, or the like or whether no data was received at all. If not, at step 516, the output voltage of node #0 is reduced by a certain voltage step, Vₛₜₑₚ, or the like, which may be chosen in accordance with the desired accuracy and resolution of the method. Then, steps 508, 510, 512 and 514 repeat until the conditions of step 514 are met. Accordingly, if the output voltage or any other relevant signal strength value is equal to or below the minimum threshold output voltage (or signal strength), or if no data was received from any of the network nodes, then step 518 may continue by storing the minimum output voltage (i.e. signal strength) at which any data was transmitted during the respective transmit opportunities for each node. The method ends at step 520, at which point a strength profile is generated in accordance with the embodiments of the present disclosure.

The example embodiment of Fig. 5 may also be altered. For example, referring to method 300, the method may also include enabling Physical Level Collision Avoidance (PLCA) for all nodes of the wired network, transmitting the first signal and the second signal as a BEACON signal, receiving a confirmation from any of the one or more network nodes of the wired network that properly discovered the respective BEACON signal, and determining the smallest signal strength for which each of the one or more network nodes of the wired network properly receives any signals based at least in part on any received confirmation. If more than two signals are transmitted, any additional signal, such as the third signal, may also be transmitted as a BEACON signal. By transmitting such BEACON signals in PLCA mode, the network nodes may be configured to generate a strength profile and to perform the network diagnostics of the present disclosure. BEACON signals are one type of message that may be utilized for this purpose. By utilizing PLCA and BEACON signals, the present method may be implemented in a very easy and straightforward as well as efficient manner which reduces risks of signal interference or collision as well as provides the network diagnostics result in a relatively short time frame (which may be limited by a maximum length of any one of the transmit opportunities in PLCA mode in accordance with which the respective timer can be set).

Further, the method 300 may also include the step of starting a new PLCA cycle with each of the first and the second signals, or any further such as a third signal if those are transmitted. This may allow the apparatus to generate a strength profile in an efficient manner that prevents collisions and is able to iterate through measurement cycles quickly, because each of the first, second and any further such as third signals will be followed by one well-defined transmit opportunity per network node of the wired network. In other words, each PLCA cycle corresponds with a single iteration that may include one signal being transmitted, such as a BEACON signal, and may further include a number of transmit opportunities, one per network node in the wired network, during which the respective nodes may provide feedback. Such a temporally well-defined order of steps corresponding with a PLCA cycle that may be reinitiated for every transmitted signal may thus prevent out of order or overlapping responses that may interfere with one another and may thus improve reliability of generating a strength profile.

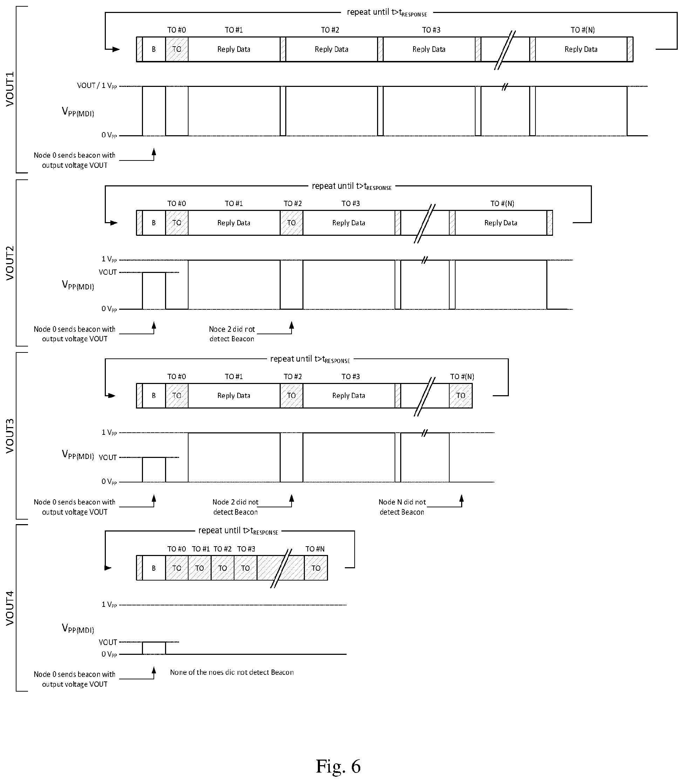

Fig. 6 shows an exemplary timeline presenting one example of either of methods 300 or 500 being carried out over time. Particularly, Fig. 6 shows that node 0, which may be an apparatus for generating the strength profile, such as a network diagnostic node like end node or head node 100, 110, may transmit beacon signals and may then wait for responses from further network nodes of the wired network. Particularly, any of the transmission opportunities #1 to #N may include responses from network nodes. As can also be seen, this is repeated for a number of different output voltages (Vₒᵤₜ₁ to Vₒᵤₜ₄ in the example of Fig. 6), but can also be repeated for other forms of different signal strengths as previously described.

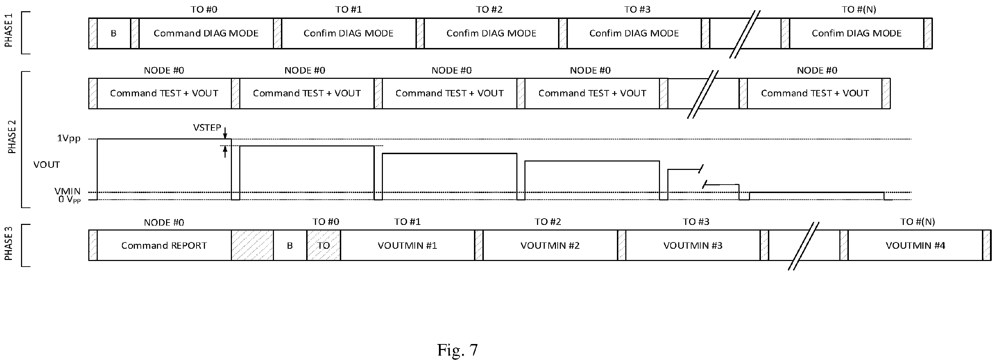

Fig. 7 shows an exemplary timeline presenting an example of method 300 being carried out over time. In contrast to the timeline of Fig. 6, this alternative may, at least in part, not rely on PLCA. Accordingly, this timeline also shows a method and flow of steps with which the method of any of the present embodiments may be implemented without utilizing PLCA and BEACON signals, for example. To achieve this, this alternative may utilize CSMA/CD instead, at least for some of the steps. CSMA/CD generally detects and recovers from collisions and is a listen before transmission technique. Because CSMA/CD is a fall back to PLCA and is generally more widely supported, this alternative may therefore have the advantage of improved compatibility, especially in cases where PLCA may not be usable or supported. It may also be more widely supported by different types of network standards. Further, CSMA/CD may not be limited to certain time durations for individual transmit opportunities as may be the case for PLCA or beacon signals. Accordingly, when CSMA/CD is used to transmit, e.g., the first signal, the second signal, the third signal or any of a plurality of signals of method 300, these signals may be transmitted over a longer duration. This may have the advantage of achieving higher accuracy, especially if the signal strength at which a signal is transmitted is close to a threshold at which a network node may no longer be able to properly receive the signal. Thus, increasing the duration may prevent cases where network nodes do not receive a signal, which they could, however, have properly received if the transmission duration would have been long enough. Such cases may arise, for example, if the signal to noise ratio or the like is close to a limit for which a network node may still receive a respective signal due to a relatively low signal strength. Accordingly, using CSMA/CD or other techniques with higher signal durations may increase the overall accuracy and reliability of the generated strength profile.

As can be seen in Fig. 7, the method may start by communicating to each network node of the wired network that diagnostic mode is to be enabled. Then, the method may continue by transmitting test signals to all network nodes of the wired network substantially simultaneously. In this case, after one test signal has been transmitted, the apparatus for generating the strength profile, such as a network diagnostic node (node #0), may decrease its signal strength, such as an output voltage, and may transmit the next signal and so on. Finally, the method may finish by requesting all nodes to transmit a message including the lowest signal strength, such as output voltage, at which each respective node has properly received the respective test signals, i.e. at which signals are recveivable. Properly receiving in this context may mean receiving the signal such that it can be successfully decoded by the receiving network node. In this example, the feedback is collectively gathered only after each of the signals, such one of the first, second and third signals, were transmitted. Method 300 allows such collective gathering of all feedback at one moment, or gathering feedback from each network node after every individual signal transmission, respectively.

Accordingly, Fig. 7 shows an example of further steps of method 300 which may include transmitting a signal to activate each of the one or more network nodes of the wired network using PLCA, transmitting the first and second (and third) signals using Carrier-Sense Multiple Access with Collision Detection (CSMA/CD), transmitting a signal triggering a report from each of the one or more network nodes of the wired network, and receiving, as the one or more feedback signals in response to the first and second signals from the one or more network nodes of the wired network, the report including an indication of the smallest signal strength for which signals are receivable by the respective network node. While these steps include transmitting the activation signal using PLCA, this is not essential and the activation signal may also be transmitted without PLCA, e.g. using CSMA/CD, depending on the requirements of the application. If, however, PLCA is enabled, this may provide the advantage of decreased and/or consistent latency, because PLCA inherently prevents collisions instead of detecting and recovering from collisions like in CSMA/CD, which may lead to unpredictable latencies. If more than a first and a second signal are transmitted, any additional signal, such as the third signal, may also be transmitted using PLCA or using CSMA/CD.

Fig. 8 shows an exemplary strength profile. As can be seen, the profile may include a number of signal strengths or output voltage settings as well as whether nodes of the wired network successfully, i.e. properly, received the signals at the respective signal strength or not. Accordingly, in the example of Node#1 of Figure 8, the signal strengths between 1Vpp and 0.5 Vpp are received, while any of the signals with a signal strength of 0.4Vpp and below are not received. As such, in the present context of the smallest signal strength, "receivable" is intended to refer to a signal strength at which the respective network node can generally receive signals when they are transmitted using said smallest signal strength. However, as also previously described, the strength profile is not limited to comprising a number of different signal strengths as shown in Fig. 8, but may also comprise only one or multiple values that are indicative of said smallest signal strength, where the indication may also be above or below the respective value (such as the 0.5Vpp for Node #1 of Figure 8) as previously described in the context of Figure 4. The step size of this example is 0.1V, but it can also be different. Likewise, the minimum threshold signal strength, such as output voltage, may be 0.1V or different. Likewise, the profile may only include a single value indicating the smallest signal strength for which signals are receivable by the respective network node, instead of a number of values as shown in Fig. 8.

In some example embodiments the set of instructions/method steps described above are implemented as functional and software instructions embodied as a set of executable instructions which are effected on a computer or machine which is programmed with and controlled by said executable instructions. Such instructions are loaded for execution on a processor (such as one or more CPUs). The term processor includes microprocessors, microcontrollers, processor modules or subsystems (including one or more microprocessors or microcontrollers), or other control or computing devices. A processor can refer to a single component or to plural components.

In other examples, the set of instructions/methods illustrated herein and data and instructions associated therewith are stored in respective storage devices, which are implemented as one or more non-transient machine or computer-readable or computer-usable storage media or mediums. Such computer-readable or computer-usable storage medium or media is (are) considered to be part of an article (or article of manufacture). An article or article of manufacture can refer to any manufactured single component or multiple components. The non-transient machine or computer-usable media or mediums as defined herein excludes signals, but such media or mediums may be capable of receiving and processing information from signals and/or other transient mediums.

Example embodiments of the material discussed in this specification can be implemented in whole or in part through network, computer, or data based devices and/or services. These may include cloud, internet, intranet, mobile, desktop, processor, look-up table, microcontroller, consumer equipment, infrastructure, or other enabling devices and services.

It is understood that the specific order or hierarchy of blocks in the processes / flowcharts disclosed is an illustration of example approaches. Based upon design preferences, it is understood that the specific order or hierarchy of blocks in the processes / flowcharts may be rearranged. Further, some blocks may be combined or omitted. The accompanying method claims present elements of the various blocks in a sample order, and are not meant to be limited to the specific order or hierarchy presented.

The previous description is provided to enable any person skilled in the art to practice the various aspects described herein. Various modifications to these aspects will be readily apparent to those skilled in the art, and the generic principles defined herein may be applied to other aspects. Thus, the claims are not intended to be limited to the aspects shown herein, but is to be accorded the full scope consistent with the language claims, wherein reference to an element in the singular is not intended to mean "one and only one" unless specifically so stated, but rather "one or more." Terms such as "if," "when," and "while" should be interpreted to mean "under the condition that" rather than imply an immediate temporal relationship or reaction. That is, these phrases, e.g., "when," do not imply an immediate action in response to or during the occurrence of an action, but simply imply that if a condition is met then an action will occur, but without requiring a specific or immediate time constraint for the action to occur. The word "exemplary" is used herein to mean "serving as an example, instance, or illustration." Any aspect described herein as "exemplary" is not necessarily to be construed as preferred or advantageous over other aspects. Unless specifically stated otherwise, the term "some" refers to one or more. Combinations such as "at least one of A, B, or C," "one or more of A, B, or C," "at least one of A, B, and C," "one or more of A, B, and C," and "A, B, C, or any combination thereof" include any combination of A, B, and/or C, and may include multiples of A, multiples of B, or multiples of C. Specifically, combinations such as "at least one of A, B, or C," "one or more of A, B, or C," "at least one of A, B, and C," "one or more of A, B, and C," and "A, B, C, or any combination thereof" may be A only, B only, C only, A and B, A and C, B and C, or A and B and C, where any such combinations may contain one or more member or members of A, B, or C. Sets should be interpreted as a set of elements where the elements number one or more. Accordingly, for a set of X, X would include one or more elements. All structural and functional equivalents to the elements of the various aspects described throughout this disclosure that are known or later come to be known to those of ordinary skill in the art are expressly incorporated herein by reference and are intended to be encompassed by the claims. Moreover, nothing disclosed herein is intended to be dedicated to the public regardless of whether such disclosure is explicitly recited in the claims. The words "module," "mechanism," "element," "device," and the like may not be a substitute for the word "means." As such, no claim element is to be construed as a means plus function unless the element is expressly recited using the phrase "means for."

In this specification, example embodiments have been presented in terms of a selected set of details. However, a person of ordinary skill in the art would understand that many other example embodiments may be practiced which include a different selected set of these details. It is intended that the following claims cover all possible example embodiments.

### LIST OF REFERENCE SIGNS

- 100: End Node / Head Node
- 101: PHY Unit
- 108: First I/O
- 109: Second I/O
- 110: End Node / Head Node
- 111: PHY Unit
- 112: PHY / PMD Transceiver
- 113: Vₒᵤₜ Select
- 114: Controller
- 118: First I/O
- 119: Second I/O
- 120: Drop Node
- 121: PHY Unit
- 126: First I/O
- 127: Second I/O
- 128: Third I/O
- 129: Fourth I/O
- 200: Wired Network
- 201: Physical Interface
- 202: Physical Interface
- 210: End Node / Head Node
- 211: PHY Unit
- 212: PHY / PMD Transceiver
- 213: Vₒᵤₜ Select
- 214: Controller
- 220: Drop Node
- 221: PHY Unit
- 230: End Node
- 231: PHY Unit

## Claims

1. An apparatus for generating a strength profile, the apparatus being configured to:
transmit, to one or more network nodes of a wired network, a first signal at a first signal strength;
transmit, to the one or more network nodes of the wired network, a second signal at a second signal strength, wherein the second signal strength is less than the first signal strength; receive, from the one or more network nodes of the wired network, one or more feedback signals in response to the first and second signals;
determine, based on the received one or more feedback signals, whether the first and second signals are received by the one or more network nodes of the wired network; and
generate, based on the determination, a first strength profile indicating, for each of the one or more network nodes of the wired network, the smallest signal strength for which signals are receivable by the respective network node.

2. The apparatus of claim 1, wherein the apparatus is further configured to:
transmit, to one or more network nodes of the wired network, a third signal at a third signal strength that is less than the second signal strength and/or the first signal strength;
receive, from the one or more network nodes of the wired network, one or more feedback signals in response to the third signal;
determine, based on the received one or more feedback signals in response to the third signal, whether the third signal is received by the one or more network nodes of the wired network; and
generate the first strength profile based on the determinations regarding the received feedback signals, the first strength profile indicating, for each of the one or more network nodes of the wired network, the smallest signal strength for which signals are receivable by the respective network node.

3. The apparatus of any one of claims 1 to 2, wherein the apparatus is further configured to:
compare the first strength profile to a predetermined strength profile to identify differences between the strength profiles; and
determine a fault in the wired network based on the differences identified in the comparison.

4. The apparatus of any one of claims 1 to 3, wherein Physical Level Collision Avoidance, PLCA, is enabled for all nodes of the wired network and wherein the apparatus is further configured to transmit the first and second signals as BEACON signals.

5. The apparatus of any one of claims 1 to 4, wherein the apparatus is further configured to:
transmit a signal to activate each of the one or more network nodes of the wired network using PLCA;
transmit the first and second signals using Carrier-Sense Multiple Access with Collision Detection, CSMA/CD;
transmit a signal triggering a report from each of the one or more network nodes of the wired network; and
receive, as the one or more feedback signals in response to the first and second signals from the one or more network nodes of the wired network, the report including an indication of the smallest signal strength for which signals are receivable by the respective network node.

6. The apparatus of any one of claims 1 to 5, wherein the apparatus is further configured to:
generate the first strength profile only for compatible network nodes; and/or
wherein the wired network is a network in accordance with the 10BASE-T1S standard.

7. The apparatus of any one of claims 1 to 6, wherein the apparatus is further configured to:
start a new PLCA cycle with each of the first and the second signals, respectively.

8. A method for generating a strength profile, the method comprising:
transmitting, to one or more network nodes of a wired network, a first signal at a first signal strength;
transmitting, to the one or more network nodes of the wired network, a second signal at a second signal strength, wherein the second signal strength is less than the first signal strength;
receiving, from the one or more network nodes of the wired network, one or more feedback signals in response to the first and second signals;
determining, based on the received one or more feedback signals, whether the first and second signals are received by the one or more network nodes of the wired network; and
generating, based on the determination, a first strength profile indicating, for each of the one or more network nodes of the wired network, the smallest signal strength for which signals are receivable by the respective network node.

9. The method of claim 8, further comprising:
transmitting, to one or more network nodes of the wired network, a third signal at a third signal strength that is less than the second signal strength and/or the first signal strength;
receiving, from the one or more network nodes of the wired network, one or more feedback signals in response to the third signal;
determining, based on the received one or more feedback signals in response to the third signal, whether the third signal is received by the one or more network nodes of the wired network; and
generating the first strength profile based on the determinations regarding the received feedback signals, the first strength profile indicating, for each of the one or more network nodes of the wired network, the smallest signal strength for which signals are receivable by the respective network node.

10. The method of any one of claims 8 or 9, further comprising:
comparing the first strength profile to a predetermined strength profile to identify differences between the strength profiles; and
determining a fault in the wired network based on the differences identified in the comparison.

11. The method of any one of claims 8 to 10, wherein Physical Level Collision Avoidance, PLCA, is enabled for all nodes of the wired network and wherein the first and second signals are transmitted as BEACON signals.

12. The method of any one of claims 8 to 11, further comprising:
transmitting a signal to activate each of the one or more network nodes of the wired network using PLCA;
transmitting the first and second signals using Carrier-Sense Multiple Access with Collision Detection, CSMA/CD;
transmitting a signal triggering a report from each of the one or more network nodes of the wired network; and
receiving, as the one or more feedback signals in response to the first and second signals from the one or more network nodes of the wired network, the report including an indication of the smallest signal strength for which signals are receivable by the respective network node.

13. The method of any one of claims 8 to 12, further comprising:
generating the first strength profile only for compatible network nodes; and/or
wherein the wired network is a network in accordance with the 10BASE-T1S standard.

14. The method of any one of claims 8 to 13, further comprising:
starting a new PLCA cycle with each of the first and the second signals, respectively.

15. A computer program comprising instructions that, when executed by a processor, causes the processor to perform a method according to any one of claims 8 to 14.
